Europäisches Patentamt

European Patent Office

Office européen des brevets

(11) Publication number: **0 089 203**
**B1**

(12) # EUROPEAN PATENT SPECIFICATION

(45) Date of publication of patent specification: **04.06.86**

(51) Int. Cl.⁴: **H 04 N 5/21,** H 04 N 5/217

(21) Application number: **83301365.9**

(22) Date of filing: **11.03.83**

(54) **Charge-coupled device cameras.**

(30) Priority: **12.03.82 JP 39999/82**

(43) Date of publication of application:
**21.09.83 Bulletin 83/38**

(45) Publication of the grant of the patent:
**04.06.86 Bulletin 86/23**

(84) Designated Contracting States:
**AT DE FR GB NL**

(56) References cited:
**GB-A-1 566 923**
**US-A-3 931 465**
**US-A-4 010 319**
**US-A-4 233 632**
**US-A-4 283 742**
**US-A-4 329 709**

(73) Proprietor: **SONY CORPORATION**
**7-35 Kitashinagawa 6-Chome Shinagawa-ku**
**Tokyo 141 (JP)**

(72) Inventor: **Miyata, Katsuro c/o Patent Division**
**Sony Corporation 7-35 Kitashinagawa-6**
**Shinagawa-ku Tokyo (JP)**
Inventor: **Asaida, Takashi c/o Patent Division**
**Sony Corporation 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to charge-coupled device (CCD) cameras.

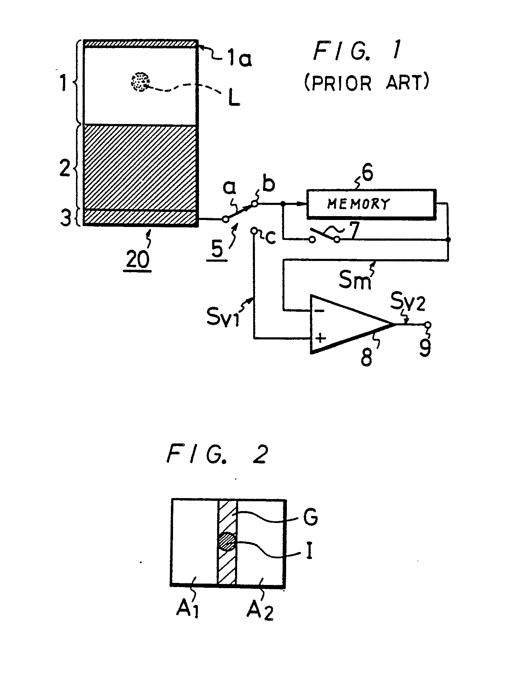

First, an example, of a previously proposed smear reducer circuit for a CCD camera will be described with reference to Figure 1 of the accompanying drawings. A solid state image pick-up device 20 such as a CCD is of frame transfer-type and comprises a photosensor section 1, a storage section 2 and an output register section 3. On the surface of the photosensor section 1 is projected an image of an object (not shown) passed through a lens system (not shown). Thus, in the photosensor section 1 is formed a charge image corresponding to the incident light. After one field period, that is 1/50 second in a fifty field per second television system, the charge image in the photosensor section 1 is transferred to the storage section 2. The charge image transferred to the storage section 2 is then further transferred to the output register section 3 in which it is converted to a serial signal and is then supplied as a pick-up output.

Now, let us assume that, as shown in Figure 1, on a part of the photosensor section 1 a relatively bright part L of the image is incident. Then, when the charge is transferred from the photosensor section 1 to the storage section 2, the charges accumulated in some other parts of the photosensor section 1 have to pass through this part L and electrons excited by the bright incident light are derived. Accordingly, when the pick-up output is reproduced by a cathode ray tube in a television receiver, as illustrated in Figure 2 of the accompanying drawings, a bright image I corresponding to the part L of Figure 1 is reproduced and a bright band-shape image G with a width the same as that of the image I is also reproduced extending in the vertical direction. The brightness of this image G is lower than that of the image I, and the image G is generally referred to as smear.

Therefore, in the smear reducer circuit of Figure 1, the pick-up output from the output register section 3 is supplied to a movable contact a of a change-over switch 5, which is preferably an electronic switch. One fixed contact b of the change-over switch 5 is connected to the input side of a one-line memory 6. The output side of the memory 6 is connected through an on-off switch 7 to the input side of the memory 6. A differential amplifier 8 acts as a subtractor. The other fixed contact c of the changeover switch 5 is connected to the non-inverting input terminal of the differential amplifier 8 and the output side of the memory 6 is connected to the inverting input terminal thereof. An output terminal 9 is connected to the output of the differential amplifier 8.

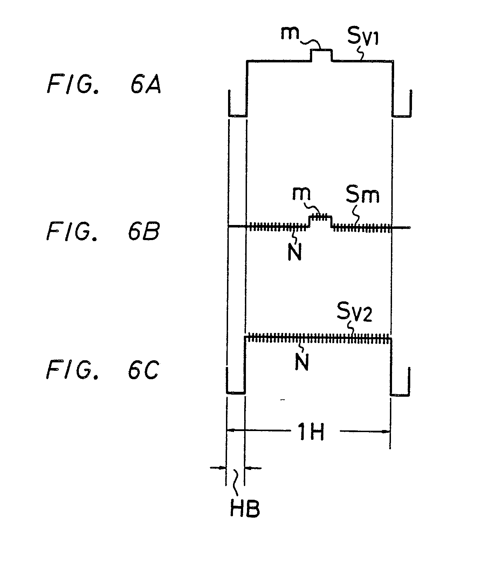

The operation of the smear reducer circuit of Figure 1 will now be described with reference to the waveform diagram of Figure 6 of the accompanying drawings. In Figure 1, a hatched area represents a light-shielding mask. In the photosensor section 1, a light-shielding or mask portion 1a is formed on, for example, its upper end (although it may be on the lower end). A pick-up signal $S_{V1}$ (Figure 6A) derived from the solid state image pick-up device 20 is supplied through the change-over switch 5 to the non-inverting input terminal of the differential amplifier 8. The pick-up signal $S_{V1}$ contains a smear component m. When a signal from the mask portion 1a of the photosensor section 1 is derived from the output register section 3, the movable contact a of the change-over switch 5 is changed in position to the fixed contact b to supply a smear signal Sm (Figure 6B) formed of only the smear component m to the memory 6. At this time, since the on-off switch 7 is turned on throughout substantially one field period, the smear signal Sm is stored in the memory 6 during substantially one field period. The movable contact a of the change-over switch 5 is selectively connected to the fixed contact c thereof in time intervals other than the one line period during which the smear signal Sm from the mask portion 1a is derived. Thus, in the differential amplifier 8 the smear signal Sm is subtracted from the pick-up signal $S_{V1}$ and then at the output terminal 9 a pick-up signal $S_{V2}$ (Figure 6C) with the smear component removed is obtained. In Figure 6, reference letter 1H represents one horizontal period and HB a horizontal blanking period.

However, in the smear reducer circuit of Figure 1, the smear signal Sm derived from the one-line memory 6 contains a noise component N so that, as shown in Figure 6C, the noise component N is superimposed on the pick-up signal $S_{V2}$ finally obtained. Therefore, although the smear is reduced, the signal-to-noise (S/N) ratio of a reproduced picture is deteriorated.

West German Offenlegungschrift DE—A1—30 37 330 (equivalent to US Specification US—A—4 329 709) discloses a solid · state colour imaging device which operates in a generally similar way. In this case, however, colour filters are provided, so that three chroma signals each including the same spectrum of smear component are produced. A single memory stores the smear component included in one of the chroma signals. Then, by subtracting respective predetermined multiples of the output of the memory, derived by respective automatic gain control circuits, from the chroma signals the smear components are eliminated from all the chroma signals. While this device achieves the objective of eliminating the smear components from the three chroma signals using only a single memory, it has the same defect as the smear reducer circuit of Figure 1, which is that a noise component is superimposed on the output signal, so that the signal-to-noise ratio of a reproduced picture is deteriorated.

· According to the present invention there is provided a charge-coupled device camera comprising:

a solid state image pick-up device including a light-shielded portion where a smear signal is generated under certain circumstances;

a memory in which said smear signal is stored; and

a subtractor for subtracting said smear signal from an output video signal of said image pick-up device to reduce the smear component in said output video signal; characterised by:

a coring circuit coupled between said memory and said subtractor for selectively passing through only that part of said smear signal which exceeds a predetermined level, thereby to obtain from said subtractor said output video signal in which said smear component and also noise components are reduced.

The invention will now be described by way of example with reference to the accompanying drawings, throughout which like parts are referred to by like references, and in which:

Figure 1 is a block diagram showing an example of a previously proposed smear reducer circuit;

Figure 2 is a schematic diagram showing an example of a reproduced picture screen for explaining the smear reducer circuit of Figure 1;

Figure 3 is a block diagram showing an embodiment of smear reducer circuit according to the invention;

Figures 4 and 5 are graphs showing an input/output characteristic of a level selector circuit which is used in the smear reducer circuit of Figure 3;

Figures 6A to 6C and 7C to 7D are waveform diagrams used to explain the operation of the smear reducer circuit of Figures 1 and 3;

Figure 8 is a block diagram showing another embodiment of smear reducer circuit according to the invention;

Figures 9A to 9G are waveform diagrams used to explain the operation of the smear reducer circuit of Figure 8;

Figures 10 and 12 are block diagrams showing further embodiments of smear reducer circuit according to the invention;

Figures 11A to 11D are waveform diagrams used to explain the operation of the smear reducer circuit of Figure 10; and

Figure 13 is a graph used to explain the operation of the smear reducer circuit of Figure 12.

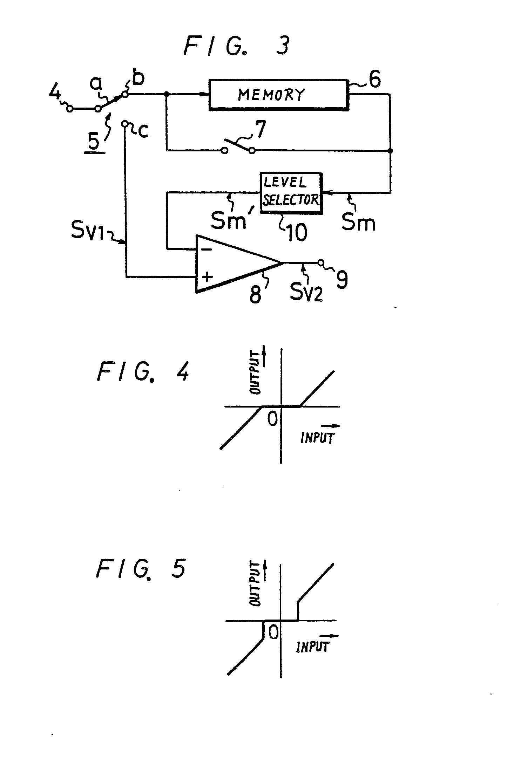

A first embodiment of smear reducer circuit will now be described with reference to Figure 3, in which parts corresponding to those of Figure 1 are marked with the same references, and for simplicity the solid state image pick-up device 20 of Figure 1 is not shown. In this embodiment the smear reducer circuit includes at the output side of the memory 6 a level selector circuit (coring circuit) 10 for selectively deriving from the input signal any signal of a predetermined level or above and supplying this derived signal as its output signal. The output signal from the level selector circuit 10 is supplied to the inverting input terminal of the differential amplifier 8. The input and output characteristics of the level selector circuit 10 are respectively shown in the graphs of Figures 4 and 5.

The graph of Figure 4 shows a characteristic in which when the input signal is less than the predetermined level, the output signal from the level selector circuit 10 is zero, while when the input signal exceeds the predetermined level, the input signal becomes the output signal of the level selector circuit 10. The graph of Figure 5 shows a characteristic in which when the level of the input signal is less than the predetermined value, the level of the output signal becomes zero, when the input signal reaches the predetermined level, the level of the output signal becomes a certain positive or negative value, and when the input signal exceeds the predetermined value, the input signal directly becomes the output signal.

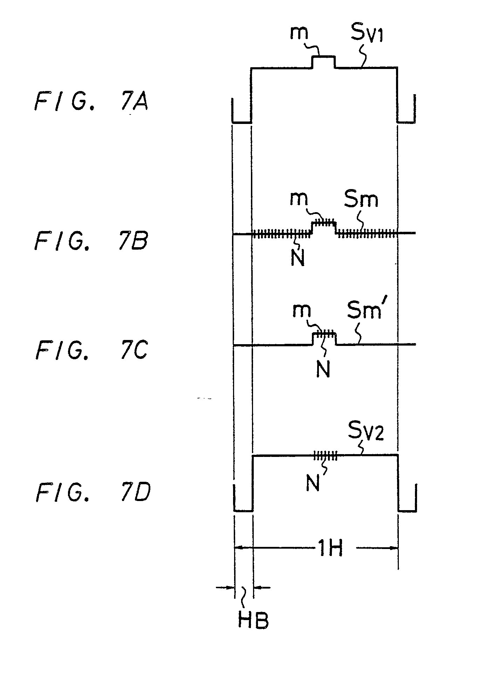

The operation of the smear reducer circuit of Figure 3 will now be described with reference to the waveform diagrams of Figure 7. Figure 7A shows the pick-up signal $S_{V1}$ which is supplied to an input terminal 4 from the solid state image pick-up device 20 (not shown). In the figure, reference letter $m$ designates the smear component. Figure 7B illustrates the smear signal Sm which is the output from the memory 6, and reference letter N denotes a noise component. The smear signal Sm is supplied to the level selector circuit 10 in which noises contained other than in the smear component $m$ are eliminated, and a smear signal Sm' (Figure 7C) of the smear component $m$ containing the noise N therein is produced, which is then fed to the inverting input terminal of the differential amplifier 8. Thus, a pick-up signal $S_{V2}$ developed at the output terminal 9 only contains the noise component N associated with the smear component $m$, so that the S/N ratio of the regions, $A_1$ and $A_2$ of both sides of the band-shape image G on the reproduced picture screen shown in Figure 2 is improved.

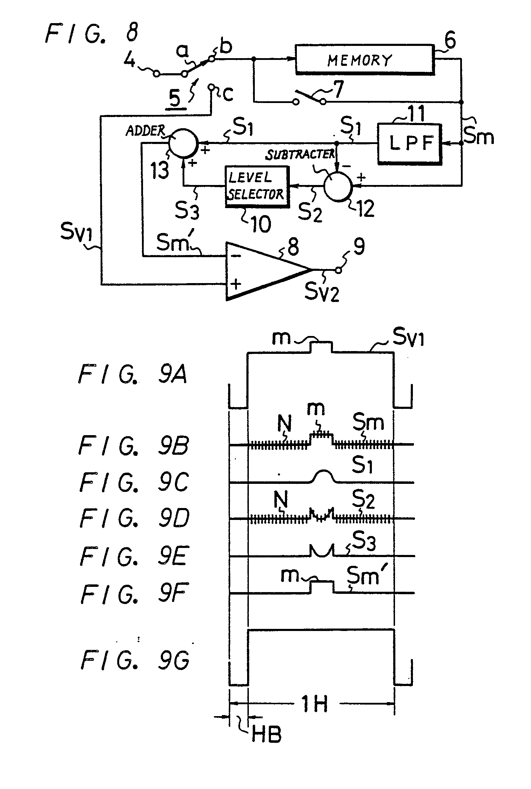

A second embodiment of smear reducer circuit will now be described with reference to Figure 8. In this embodiment, the output or smear signal Sm from the memory 6 is supplied to a low-pass filter 11 and to a compounder or subtractor 12. The output $S_1$ from the low-pass filter 11 is supplied to the subtractor 12 to be subtracted from the output Sm of the memory 6. The output $S_2$ from the subtractor 12 is supplied to the level selector circuit 10 whose output $S_3$ is fed to a compounder or adder 13 to which the output $S_1$ from the low-pass filter 11 is also supplied, so that the output $S_3$ from the level selector circuit 10 is added to the output $S_1$ from the low-pass filter 11. The added output Sm' therefrom is then fed to the inverting input terminal of the differential amplifier 8.

The operation of the smear reducer circuit of Figure 8 will now be described with reference to Figure 9. To the input terminal 4 is supplied the pick-up signal $S_{V1}$ as shown in Figure 9A. The memory 6 produces at its output the smear signal Sm containing the noise component N as shown in Figure 9B. The smear signal Sm is supplied to the low-pass filter 11 which then generates the signal $S_1$ with the noise component N eliminated, as well as the smear component $m$ of which the waveform is blunted as shown in Figure 9C. In the subtractor 12, the signal $S_1$ is subtracted from the smear signal Sm so that the signal $S_2$ (containing the noise component N) as shown in Figure 9D is produced. The signal $S_2$ is supplied to the level selector circuit 10 which then produces the signal $S_3$ with all the noise component N of the signal $S_2$ cancelled out. In the adder 13, the signals $S_1$ and $S_3$ are added to each other to produce the smear signal Sm' having no noise component N but with the smear component $m$ only, as shown in Figure 9F. The smear signal Sm' is supplied to the differential amplifier 8 to be subtracted from the pick-up signal $S_{V1}$, and so at the output terminal 9 is developed the pick-up signal $S_{V2}$ without either the smear component $m$ or the noise component N, as shown in Figure 9G.

In the above-described embodiments of the invention, regardless of the presence or absence of the smear component in the pick-up signal from the solid state image pick-up device, the differential amplifier 8 forming the subtractor is operated to subtract the smear signal from the pick-up signal. Therefore, when no smear component exists or the level thereof is fairly small, if the smear reducing function is performed, the S/N ratio of the pick-up signal is rather deteriorated.

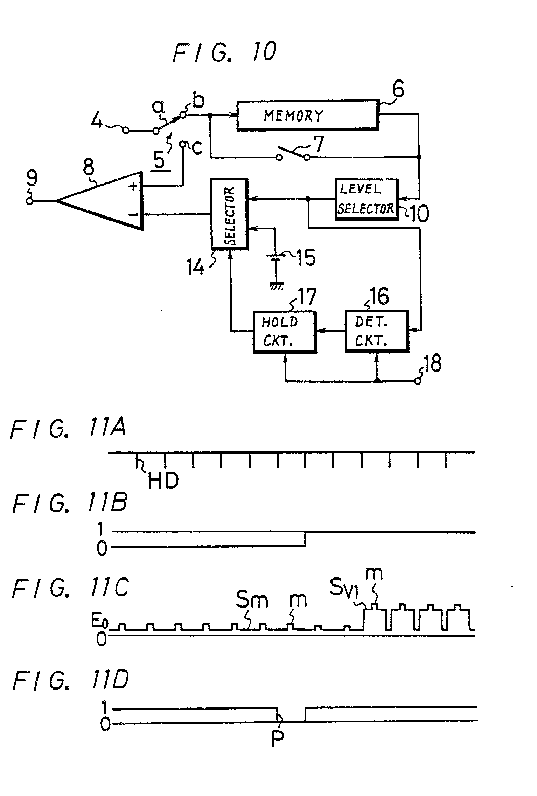

A third embodiment of smear reducer circuit in which this defect is alleviated will now be described with reference to Figure 10. At the output side of the level selector circuit 10 is provided a selector 14 which selectively operates directly to supply the smear signal derived from the level selector circuit 10 to the inverting input terminal of the differential amplifier 8 when the pick-up signal from the solid state image pick-up device 20 (not shown) contains the smear component, or to supply a reference voltage $E_0$ from a reference voltage source 15 to the inverting input terminal of the differential amplifier 8 when the pick-up signal contains no smear component or a smear component of low level. To this end, the output from the level selector circuit 10 is supplied to a smear discriminator or detector circuit 16 and the output therefrom is supplied to a one-field hold circuit 17, the output of which is supplied to the selector 14 as its control signal. Moreover, a smear detection timing signal is supplied from an input terminal 18 to the smear detector circuit 16 and the one-field hold circuit 17.

The operation of the smear reducer circuit of Figure 10 will be described with reference to the waveform diagrams of Figure 11. Figure 11A illustrates a horizontal synchronizing signal HD. Figure 11B illustrates periods during which the smear signal Sm and the pick-up signal $S_{V1}$ of the pick-up output from the solid state image pick-up device 20 are respectively obtained. In Figure 11B, the level 0 denotes the smear signal period, while the level 1 denotes the pick-up signal period.

Figure 11C illustrates the pick-up output derived from the solid state image pick-up device 20 in which reference letter $m$ designates the smear component, Sm the smear signal, and $S_{V1}$ the pick-up signal; the pick-up signal $S_{V1}$ containing the smear component $m$. Figure 11d illustrates the smear detection timing signal P which is a pulse associated with the last one horizontal period of the smear signal period. During this period, the level of the smear component $m$ of the smear signal Sm is detected and if the detected level is beyond a predetermined level, it is judged that there is smear and the smear detector circuit 16 produces the detected output. For the detection of the level of the smear signal Sm, it is sufficient that the added fum of the detected peak value to the mean value of the smear signal Sm is produced, and when this added sum is beyond the predetermined level, the smear detector circuit 16 produces the detected output.

In the embodiment of Figure 10, the reference voltage source 15 is provided to apply its reference voltage $E_0$ (Figure 11C) to the inverting input terminal of the differential amplifier 8 when the smear reducing operation is not necessary. This is because the black level of the pick-up signal with the smear reduced must be prevented from being varied.

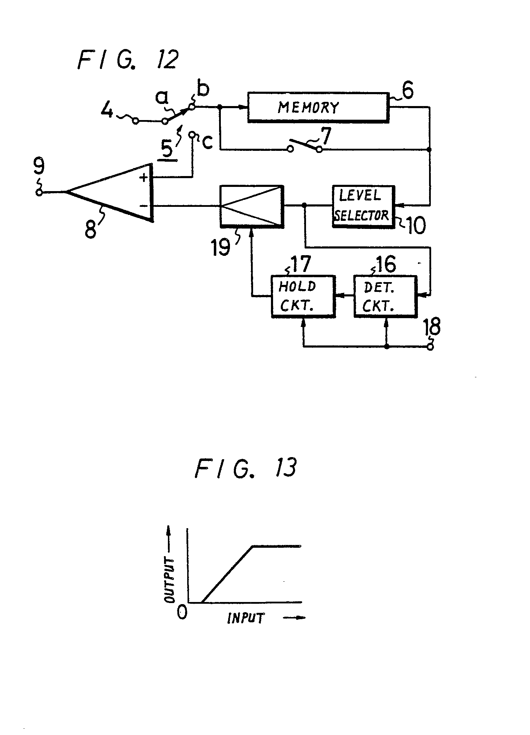

While in the embodiment of Figure 10 the smear reducing operation is performed depending on the judgement whether the smear level is above or below the predetermined value, it is also possible that, as shown in Figure 12, the amount of smear reduction may be varied in response to the smear level. In the embodiment of Figure 12, the output from the level selector circuit 10 is supplied to the inverting input terminal of the differential amplifier 8 via a variable gain amplifier 19. Then, the detecting signal associated with the added sum of the detected peak and mean values of the smear signal Sm from the smear detector circuit 16 is supplied through the one-field period hold circuit 17 to the variable gain amplifier 19 as its gain control signal whereby, in response to the level of the smear signal Sm, the level of the smear reducing signal, which is to be supplied from the level selector circuit 10 to the inverting input terminal of the differential amplifier 8, is varied. More specifically, as shown in Figure 13, when the level of the smear signal Sm (that is, the input of the variable gain amplifier 19) is large, the level of the smear reducing signal (that is, the output from the variable gain amplifier 19) is selected to be large. When the level of the smear signal Sm is larger that the predetermined value, the level of the smear reducing signal is selected as a constant value L. While, when the level of the smear signal Sm is small, the level of the smear reducing signal is selected to be small, and when the level of the smear signal Sm is smaller than the predetermined value, the level of the smear reducing signal is made zero.

Furthermore, it is possible that the embodiment of Figure 8 may be combined with the embodiment of Figure 10 or 11.

Thus, with the embodiments, since the level selector circuit for selectively producing the input signal with the level higher than the predetermined level as its output signal is provided at the output side of the memory for storing the smear signal, the S/N ratio of the pick-up signal can be improved.

While in the above embodiments the solid state image pick-up device is of frame transfer-type, the invention can also be applied to a solid state image pick-up device of interline transfer-type with the same effect.

## Claims

1. A charge-coupled device camera comprising:
a solid state image pick-up device (20) including a light-shielded portion (1a) where a smear signal is generated under certain circumstances;
a memory (6) in which said smear signal is stored; and
a subtractor (8) for subtracting said smear signal from an output video signal of said image pick-up device (2) to reduce the smear component in said output video signal;
characterised by:
a coring circuit (10) coupled between said memory (6) and said subtractor (8) for selectively passing through only that part of said smear signal which exceeds a predetermined level, thereby to obtain from said subtractor (8) said output video signal in which said smear component and also noise components are reduced.

2. A camera according to claim 1 further comprising a selector means (14) connected to the output side of said coring circuit (10), said selector means (14) being operated to select either of the output from said coring circuit (10) or a predetermined DC level in response to the level of said smear signal.

3. A camera according to claim 2 wherein said selector means (14) detects the level of said smear signal from the output of said coring circuit (10) and selects the output of said coring circuit (10) when the level of said smear signal exceeds said predetermined level.

4. A camera according to claim 1 further comprising a level varying means (19) connected to the output side of said coring circuit (10), said level varying means (19) varying the level of said smear signal from said coring circuit (10).

5. A camera according to claim 4 wherein said level varying means (19) detects the level of said smear signal from the output of said coring circuit (10) and is controlled by the level of said smear signal.

6. A camera according to claim 1 further comprising a low-pass filter (11) connected to the output side of said memory (6), a further subtractor (12) for subtracting the output of said low-pass filter (11) from the output of said memory (6), said coring circuit (10) being connected to the output side of said further subtractor (12), and an adder (13) for adding the output from said coring circuit (10) to the output of said low-pass filter (11) for supply to said first-mentioned subtractor (8).

7. A camera according to any one of the preceding claims wherein said solid state image pick-up device (20) is a frame transfer-type charge-coupled device.

8. A camera according to any one of the preceding claims wherein said solid state image pick-up device (20) is an interline-type charge-coupled device.

## Patentansprüche

1. Kamera mit einer ladungsgekoppelten Einrichtung, mit einer Festkörper-Bildaufnahmeeinrichtung (20), die einen vor Licht abgeschirmten Teil (1a) aufweist, in welchem unter gewissen Bedingungen ein Nachziehsignal erzeugt wird, mit einem Speicher (6), in dem das Nachziehsignal gespeichert wird, und mit einer Subtrahiereinrichtung (8) zum Subtrahieren des genannten Nachziehsignals von einem Ausgangs-Videosignal der Bildaufnahmeeinrichtung (20) zur Reduzierung der Nachziehkomponente in dem genannten Ausgangs-Videosignal, dadurch gekennzeichnet, daß zwischen dem genannten Speicher (6) und der genannten Subtrahiereinrichtung (8) eine Kernwertmittlungsschaltung (10) angeschlossen ist, die selektiv lediglich denjenigen Teil des Nachziehsignals durchläßt, der einen bestimmten Pegel überschreitet, derart, daß dadurch von der Subtrahiereinrichtung (8) das Ausgangs-Videosignal erhalten wird, in welchem die Nachziehkompoente und außerdem Störungskomponenten reduziert sind.

2. Kamera nach Anspruch 1, bei der mit der Ausgangsseite der Kernwertermittlungsschaltung (10) eine Auswahleinrichtung (14) verbunden ist, die so betrieben ist, daß entweder das Ausgangssignal von der Kernwertermittlungsschaltung (10) oder ein bestimmter Gleichspannungspegel auf den Pegel des genannten Nachzeihsignals ausgewählt wird.

3. Kamera nach Anspruch 2, wobei die Auswahleinrichtung (14) den Pegel des genannten Nachziehsignals aus dem Ausgangssignal der Kernwertermittlungsschaltung (10) ermittelt und das Ausgangssignal der betreffenden Kernwertermittlungsschaltung (10) in dem Fall auswählt, daß der Pegel des genannten Nachziehsignals den genannten bestimmten Pegel überschreitet.

4. Kamera nach Anspruch 1, wobei mit der Ausgangsseite der Kernwertermittlungsschaltung (10) eine Pegelveränderungseinrichtung (19) verbunden ist, welche den Pegel des genannten Nachziehsignals von der Kernwertermittlungsschaltung (10) her verändert.

5. Kamera nach Anspruch 4, wobei die Pegelveränderungseinrichtung (19) den Pegel des genannten Nachziehsignals aus dem Ausgangssignal der Kernwertermittlungsschaltung (10) ermittelt und durch den Pegel des genannten Nachziehsignals gesteuert ist.

6. Kamera nach Anspruch 1, wobei mit der Ausgangsseite des Speichers (6) ein Tiefpaßfilter (11) verbunden ist, wobei ein weitere Subtrahiereinrichtung (12) vorgesehen ist, die das Ausgangssignal des genannten Tiefpaßfilters (11) von dem Ausgangssignal des Speichers (6) subtrahiert, wobei die Kernwertermittlungsschaltung (10) mit der Ausgangsseite der genannten weiteren Subtrahiereinrichtung (12) verbunden ist und wobei ein Addierer (13) das Ausgangssignal der Kernwertermittlungsschaltung (10) zu dem Ausgangssignal des Tiefpaßfilters (11) addiert und die erstgenannte Subtrahiereinrichtung (8) speist.

7. Kamera nach einem der vorhergehenden Ansprüche, wobei die Festkörper-Bildaufnahme-einrichtung (20) eine ladungsgekoppelt Ein-richtung vom Bildübertragungstyp ist.

8. Kamera nach einem der vorhergehenden Ansprüche, wobei die Festkörper-Bildaufnahme-einrichtung (20) eine ladungsgekoppelt Ein-richtung vom Zwischenzeilentyp ist.

**Revendications**

1. Caméra du type à dispositif à couplage de charge comprenant:

— un dispositif de prise de vues (20) du type état solide comportant une partie (1a) protégée vis-à-vis de la lumière où il est produit un signal de traînage dans certaines conditions;
— une mémoire (6) dans laquelle ledit signal de traînage est emmagasiné; et
— un soustracteur (8) servant à soustraire d'un signal vidéo de sortie du dispositif de prise de vues (2) le signal de traînage afin de réduire la composante de traînage dans le signal vidéo de sortie;

càractérisé par:

— un circuit d'évidement (10) connecté entre ladite mémoire (6) et ledit soustracteur (8) afin de laisser sélectivement passer la seule partie dudit signal de traînage qui dépasse un niveau prédéterminé, pour obtenir du soustracteur (8) ledit signal vidéo de sortie dans lequel la composante de traînage et, également, des composantes de bruit ont été diminuées.

2. Caméra selon la revendication 1, comprenant en outre un moyen sélecteur (14) connecté au côté sortie dudit circuit d'évidement (10), le moyen sélecteur (14) ayant pour fonction de sélectionner le signal de sortie du circuit d'évidement (10) ou un niveau continu prédéterminé en fonction du niveau dudit signal de traînage.

3. Caméra selon la revendication 2, où le moyen sélecteur (14) détecte le niveau du signal de traînage dans le signal de sortie du circuit d'évidement (10) et sélectionne le signal de sortie du circuit d'évidement (10) lorsque le niveau du signal de traînage dépasse le niveau prédéterminé.

4. Caméra selon la revendication 1, comprenant en outre un moyen (19) destiné à faire varier le niveau, qui est connecté au côté sortie du circuit d'évidement (10), le moyen (19) de variation de niveau faisant varier le niveau du signal de traînage issu du circuit d'évidement (10).

5. Caméra selon la revendication 4, où le moyen de variation de niveau (19) détecte le niveau du signal de traînage dans le signal de sortie du circuit d'évidement (10) et est commandé par le niveau du signal de traînage.

6. Caméra selon la revendication 1, comprenant en outre un filtre passe-bas (11) connecté au côté sortie de ladite mémoire (6), un soustracteur supplémentaire (12) servant à soustraire du signal de sortie de la mémoire (6) le signal de sortie du filtre passe-bas (11), ledit circuit d'évidement (10) étant connecté au côté sortie dudit soustracteur supplémentaire (12), et un additionneur (13) servant à additionner le signal de sortie du circuit d'évidement (10) au signal de sortie du filtre passe-bas (11) pour délivrer le résultat obtenu au soustracteur mentionné en premier (8).

7. Caméra selon l'une quelconque des revendications précédentes, où le dispositif de prise de vues (20) du type état solide est un dispositif à couplage de charge du type à transfert d'image complète.

8. Caméra selon l'une quelconque des revendications précédentes, où le dispositif de prise de vues (20) du type état solide est un dispositif à couplage de charge du type interligne.

FIG. 1
(PRIOR ART)

FIG. 2

## F I G. 3

## F I G. 4

## F I G. 5

FIG. 6A

FIG. 6B

FIG. 6C

$S_{V1}$

m

$S_m$

m

N

$S_{V2}$

N

1H

HB

FIG. 7A

m    Sv1

FIG. 7B

m    Sm

N

FIG. 7C

m    Sm'

N

FIG. 7D

Sv2

N'

1H

HB

FIG. 8

FIG. 9A

FIG. 9B

FIG. 9C

FIG. 9D

FIG. 9E

FIG. 9F

FIG. 9G

FIG. 10

FIG. 11A

HD

FIG. 11B

FIG. 11C

FIG. 11D

*F I G. 12*

*F I G. 13*